# EUROPÄISCHE PATENTSCHRIFT

(11) **EP 3 272 580 B1**
(45) Veröffentlichungstag und Bekanntmachung des Hinweises auf die Patenterteilung: **01.04.2020**
(21) Anmeldenummer: 17181516.0
(22) Anmeldetag: 14.07.2017
(51) Int. Cl.: B60P 1/64

(54) **TRANSPORTRAHMEN FÜR EINEN TRANSPORTIERBAREN AUFBAU, TRANSPORTAUFBAU MIT EINEM DERARTIGEN TRANSPORTRAHMEN UND TRANSPORTANORDNUNG MIT EINEM DERARTIGEN TRANSPORTAUFBAU**
TRANSPORT FRAME FOR A TRANSPORTABLE STRUCTURE, TRANSPORT STRUCTURE WITH SUCH A TRANSPORT FRAME AND TRANSPORT ASSEMBLY WITH SUCH A TRANSPORT STRUCTURE
CHÂSSIS DE TRANSPORT POUR UNE STRUCTURE TRANSPORTABLE, STRUCTURE DE TRANSPORT COMPRENANT UN TEL CHÂSSIS ET SYSTÈME DE TRANSPORT COMPRENANT UNE TELLE STRUCTURE DE TRANSPORT

(30) Priorität: 21.07.2016 DE 102016213397
(43) Veröffentlichungstag der Anmeldung: 24.01.2018
(73) Patentinhaber: Max Aicher GmbH & Co. KG, 83395 Freilassing (DE)
(72) Erfinder: Finke, Olaf, 01906 Burkau (DE); Kramer, Klaus-Jürgen, 01877 Bischofswerde (DE); Meyer, Dirk, 01877 Bischofswerda (DE); Sencar, Marjan, 01877 Bischofswerda (DE)
(74) Vertreter: Rau, Schneck & Hübner Patentanwälte Rechtsanwälte PartGmbB

(56) Entgegenhaltungen:
- EP-A1- 2 946 916
- DE-A1- 1 531 809
- DE-A1- 3 809 871
- US-A- 5 395 203
- US-A1- 2010 086 388

## Beschreibung

Die Erfindung betrifft einen Transportaufbau mit einem Transportrahmen sowie eine Transportanordnung mit einem derartigen Transportaufbau.

Die DE 1 531 809 A1 und die US 5,395,203 offenbaren Transportrahmen für den Containertransport.

Die US 2010/0086388 A1 und die DE 38 09 871 A1 offenbaren Transportrahmen mit unterschiedlichen Aufbauten.

Ein transportierbarer Aufbau in Form einer mobilen Presse ist aus EP 2 946 916 A1 bekannt. Die Presse weist ein Fahrwerk auf und ist ortsveränderlich.

Der Erfindung liegt die Aufgabe zugrunde, den Transport eines Aufbaus zu verbessern.

Die Aufgabe wird durch die Merkmale der Ansprüche 1 und 12 gelöst. Der Kern der Erfindung besteht darin, dass ein Transportrahmen bereitgestellt wird, mittels dem ein transportierbarer Aufbau unkompliziert, schnell und fehlerunanfällig mit einem Unterbau gekoppelt und anschließend transportiert werden kann. Der Transportrahmen weist eine Rahmenstruktur auf, die insbesondere flächig und insbesondere einteilig ausgeführt ist. Die Rahmenstruktur bildet eine Abstellbasis, auf der der transportierbare Aufbau abgestellt und angeordnet werden kann. Der Transportrahmen ermöglicht ein unmittelbares Abstellen des am Transportrahmen befestigten Aufbaus auf einem Untergrund. Als Abstellort ist lediglich ein tragfähiger, nivellierter Untergrund erforderlich, wie dies beispielsweise durch ein ebenes Kiesbett gegeben ist. Der Vorbereitungsaufwand am Abstellort ist reduziert. Zum Befestigen des Aufbaus am Transportrahmen ist mindestens ein Befestigungselement vorgesehen. Insbesondere sind mehrere Befestigungselemente vorgesehen. Der Aufbau ist zuverlässig und sicher am Transportrahmen, insbesondere an der Rahmenstruktur, befestigt. Die Befestigung kann lösbar oder unlösbar erfolgen. Der Aufbau weist einen statischen Aufbau, der dauerhaft am Transportrahmen befestigt bleiben soll, sowie einen Wechselaufbau, der vom Transportrahmen wechselbar ausgeführt sein soll, auf. Der stationäre Aufbau umfasst eine Presse, die beispielsweise als Ballenpresse, Stoffpresse oder Schneckenpresse ausgeführt sein kann. Insofern ist zumindest für den statischen Aufbau eine unlösbare Befestigung möglich. Der Wechselaufbau ist in Form eines separaten, an die Presse, anzudockenden Container ausgeführt, der insbesondere von der Presse befüllt werden kann. Eine lösbare Befestigung zumindest für den Wechselaufbau hat den Vorteil, beispielsweise zu Reparatur- oder Austauschzwecken, den Aufbau vereinfacht vom Transportrahmen wieder lösen zu können. Der Transportrahmen weist ferner mindestens eine Koppelstruktur auf, um den Transportrahmen lösbar an einem Unterbau zu koppeln. Die mindestens eine Koppelstruktur ermöglicht eine unmittelbare und ausschließliche Anbringung des Transportrahmens an dem Unterbau. Der Unterbau ist insbesondere ein Transportfahrzeug, insbesondere in Lastkraftwagen oder ein Anhänger eines Lastkraftwagens. Der Unterbau kann auch ein stationäres Podest sein mit einer Aufliegerfläche, auf der der Transportrahmen abgestellt wird. Der Transportrahmen dient als Verbindungskupplung zwischen dem Aufbau, der beispielsweise eine mobile Presse sein kann, und dem Unterbau. Mittels des Transportrahmens ist es möglich, den Aufbau mit dem Transportfahrzeug zu einem Einsatzort zu transportieren. Der Aufbau wird zusammen mit dem Transportrahmen vom Transportfahrzeug abgenommen und am Einsatzort abgestellt. Das Transportfahrzeug ist damit wieder freigegeben und kann für andere Einsatzzwecke genutzt werden. Die Wartezeiten für ein Transportfahrzeug am Einsatzort, während die mobile Presse im Einsatz ist, ist reduziert. Die Auslastung des Transportfahrzeugs ist erhöht. Der Transportrahmen ermöglicht einen wirtschaftlich vorteilhaften Betrieb und Nutzung des Aufbaus und des Transportfahrzeugs. Der Transportrahmen ermöglicht eine standardisierte Kopplung über die mindestens eine Koppelstruktur mit dem Unterbau, insbesondere unabhängig von der Ausgestaltung des Aufbaus.

Der Transportaufbau weist den Transportrahmen und einen am Transportrahmen befestigten Aufbau auf.

Eine Anordnung des mindestens einen Befestigungselements gemäß Anspruch 2 vereinfacht das Befestigen des Aufbaus. Der Aufbau kann unmittelbar auf der Rahmenstruktur abgestellt und an der Rahmenstruktur befestigt werden.

Eine Anordnung der Koppelstruktur gemäß Anspruch 3 ermöglicht eine vereinfachte Kopplung des Transportrahmens mit dem Unterbau.

Eine Linearführung gemäß Anspruch 4 vereinfacht das Aufschieben des Transportrahmens auf den Unterbau.

Eine Ausführung der Koppelstruktur gemäß Anspruch 5 gewährleistet ein vereinfachtes, weil standardisiertes, Koppeln des Transportrahmens mit dem Unterbau in Form eines Transportfahrzeugs. Gängige Transportfahrzeuge sind für den Transport von Abrollbehältern gemäß DIN 30722 und/oder für den Transport von Absetzkippern gemäß DIN 30720 ausgeführt. Derartige Transportfahrzeuge können unmittelbar für den Transport des Transportrahmens genutzt werden. Als Transportfahrzeug dient beispielsweise ein Hakenlift-Lastkraftwagen mit Standardanhänger, wie er beispielsweise zum Transport von Containerbehältern verwendet werden kann. Weitere Umbaumaßnahmen sind entbehrlich. Der Transportrahmen erschließt bereits vorhandener Transportinfrastruktur für den Transport von Spezialanlagen in Form des Aufbaus. Der Transportrahmen stellt einen Adapter dar zum Verbinden des Aufbaus, insbesondere des stationären Aufbaus, insbesondere der Presse, die insbesondere individuelle Spezialmaße aufweist, mit standardisierten Transportmaßen für Transportfahrzeuge.

Die Anordnung mehrerer Befestigungselemente gemäß Anspruch 6 ermöglicht die Nutzung von Standard-Transportcontainern als Wechselaufbau.

Die Ausführung des mindestens einen Befestigungselements gemäß Anspruch 7 ermöglicht eine zuverlässige und zugleich lösbare Verriegelung des Wechselaufbaus am Transportrahmen.

Die Ausführung des mindestens einen Befestigungselements gemäß Anspruch 8 ermöglicht eine unmittelbare Befestigung des stationären Aufbaus. Eine vorteilhafte lösbare Befestigung des stationären Aufbaus ist durch eine Schraubverbindung gegeben. Befestigungsschrauben können zum Anschrauben des statischen Aufbaus am Transportrahmen verwendet werden. Eine besonders haltbare und zuverlässige Verbindung ist durch die Ausführung des Befestigungselements als Schweißnaht gegeben, die den stationären Aufbau dauerhaft mit der Rahmenstruktur verbindet.

Ein Rollelement gemäß Anspruch 9 ermöglicht ein Abrollen des Transportrahmens auf dem Untergrund. Insbesondere das Aufsetzen auf und das Absetzen von dem Unterbau auf den Untergrund ist vereinfacht.

Die Ausführung der Rahmenstruktur gemäß Anspruch 10 ist besonders robust und stabil. Insbesondere ist die Rahmenstruktur aus mehreren Profilelementen hergestellt. Die Profilelemente sind insbesondere als Stahlträger mit standardisierter Profil-Querschnittsform, beispielsweise I-Träger, ausgeführt. Insbesondere sind mehrere Längselemente und mehrere Querelemente vorgesehen, die insbesondere in Form eines offenen Rasters zueinander angeordnet sind. Die Rahmenstruktur ist insbesondere eben ausgeführt und ermöglicht ein flächiges Aufliegen auf dem Unterbau. Die Rahmenstruktur ist insbesondere parallel zu dem Unterbau angeordnet.

Ein Stirnabschnitt gemäß Anspruch 11 vereinfacht das Auf- und Absetzen des Transportrahmens. Der Stirnabschnitt ist an der Rahmenstruktur befestigt. Der Stirnabschnitt ist flächig ausgeführt. Der Stirnabschnitt ist gegenüber der Rahmenstruktur quer, insbesondere senkrecht, orientiert.

Eine Transportanordnung gemäß Anspruch 12 weist im Wesentlichen die Vorteile des Transportaufbausauf, worauf hiermit verwiesen wird.

Ein Gegenbefestigungselement gemäß Anspruch 13 gewährleistet ein unmittelbares Zusammenwirken mit dem Befestigungselement der Rahmenstruktur.

Weitere vorteilhafte Ausgestaltungen, zusätzliche Merkmale und Einzelheiten der Erfindung ergeben sich aus der nachfolgenden Beschreibung eines Ausführungsbeispiels anhand der Zeichnung. Es zeigen:
- Fig. 1: eine Seitenansicht eines erfindungsgemäßen Transportrahmens mit einem stationären Aufbau,
- Fig. 2: eine Draufsicht des Transportrahmens gemäß Fig. 1,
- Fig. 3: eine Rückansicht des Transportrahmens gemäß Fig. 1,
- Fig. 4: eine vergrößerte Detaildarstellung des Details IV in Fig. 1 und
- Fig. 5: eine vergrößerte Schnittansicht gemäß Schnittlinie V-V in Fig. 1.

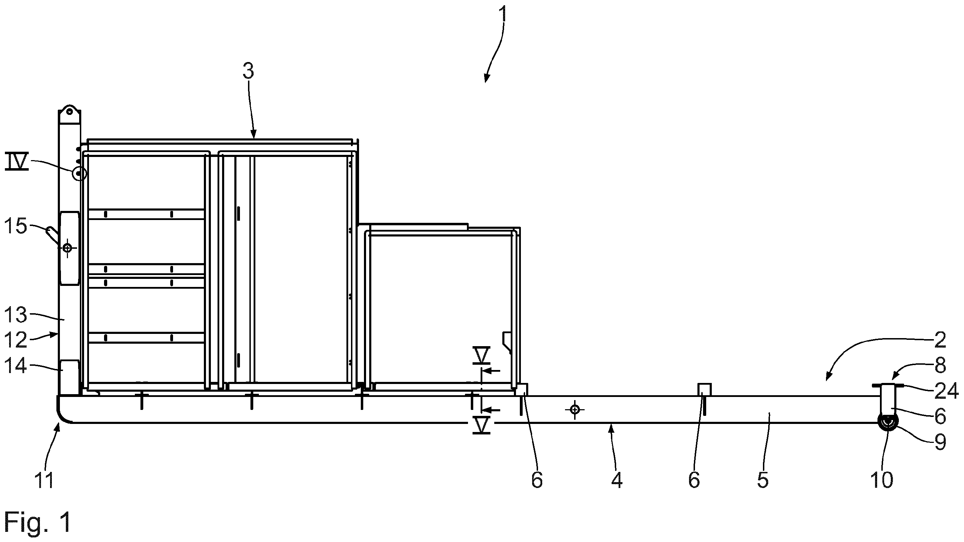

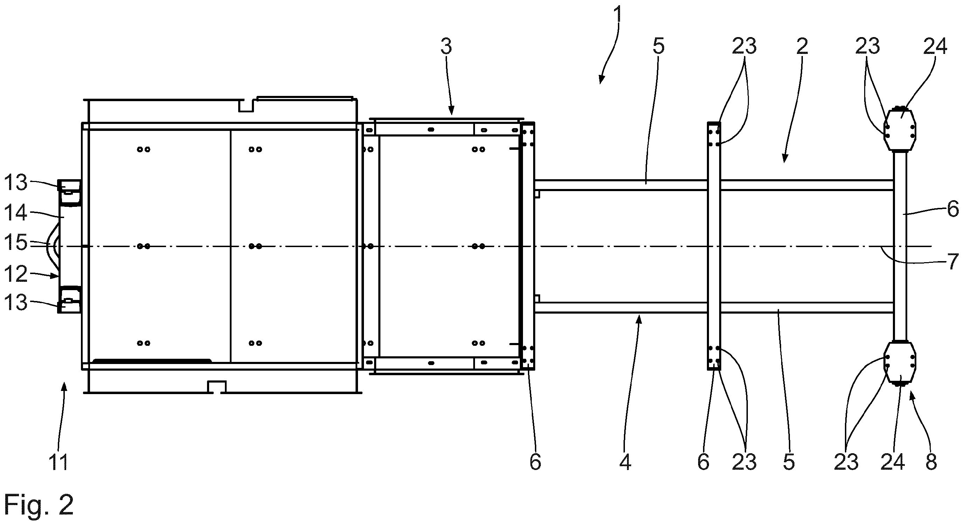

Ein in Fig. 1 bis 5 als Ganzes mit 1 bezeichneter Transportaufbau weist einen Transportrahmen 2 und einen daran befestigten stationären Aufbau 3 auf. An dem Transportrahmen 2 kann zusätzlich ein nicht dargestellter Wechselaufbau in Form eines Transportcontainers befestigt werden. Der Wechselaufbau kann mit dem stationären Aufbau korrespondieren. Der stationäre Aufbau 3 ist gemäß dem gezeigten Ausführungsbeispiel als Presse ausgeführt. Eine derartige Presse ist aus der EP 2 946 916 A1 bekannt. Bezüglich Aufbau und Funktion der Presse wird hierauf verwiesen.

Der Transportrahmen 2 weist eine flächige Rahmenstruktur 4 auf. Die Rahmenstruktur 4 ist eben ausgeführt und definiert eine Rahmenebene. Parallel zur Rahmenebene weist die Rahmenstruktur 4 eine dem Aufbau 3 zugewendete Oberseite und eine dem Aufbau 3 abgewendete Unterseite auf. Die Rahmenstruktur 4 weist zwei Längselemente 5 und mehrere, insbesondere mindestens sieben, Querelemente 6 auf. Die Längselemente 5 und die Querelemente 6 sind insbesondere als Stahl-Profilträger ausgeführt. Die Längselemente 5 sind parallel zueinander und gleich beabstandet bezüglich einer Längsachse 7 des Transportrahmens 2 angeordnet. Der Transportaufbau 1 kann derart auf einem Unterbau, insbesondere auf einem Transportfahrzeug, angeordnet werden, dass die Längsachse 7 entlang der Fahrrichtung des Transportfahrzeugs orientiert ist.
Die Querelemente 6 sind quer und insbesondere senkrecht zu den Längselementen 5 orientiert. Die Querelemente 6 sind dauerhaft und unlösbar mit den Längselementen 5, insbesondere durch Schweißen, verbunden. Die Längselemente 5 und die Querelemente 6 bilden eine Grundstruktur.

An einem hinteren, in Fig. 1 rechts dargestellten Ende 8 weist der Transportrahmen 2 zwei Rollenelemente 9 auf. Die Rollenelemente 9 sind an einer Unterseite des hinteren Querelements 6 drehbar um eine Drehachse 10 gelagert. Die Rollenelemente 9 ragen an der Unterseite des Transportrahmens 2 über. Mit den Rollenelementen 9 kann der Transportrahmen 2 auf einem Untergrund verfahren werden.

An einem dem hinteren Ende 8 gegenüberliegenden, in Fig. 1 links dargestellten, vorderen Ende 11 ist an der Rahmenstruktur 4 ein Stirnabschnitt 12 befestigt. Der Stirnabschnitt 12 ist stirnseitig an der Rahmenstruktur 4 befestigt. Der Stirnabschnitt 12 ist flächig eben ausgeführt und weist zwei Vertikalelemente 13 und mehrere Querelemente 14 auf. Der Stirnabschnitt 12 gibt eine, insbesondere vertikal orientierte, Stirnabschnittsebene vor, die quer, insbesondere senkrecht zur Rahmenebene orientiert ist. Die Stirnabschnittsebene ist insbesondere senkrecht zum Untergrund angeordnet. Die Flächennormale der Stirnabschnittsebene ist parallel zur Längsachse 7.

Am Stirnabschnitt 12 ist ein Bügel 15 vorgesehen, der bezüglich des Stirnabschnitts 12 an einer Vorderseite übersteht. An dem Bügel 15 kann der Transportaufbau von einem Haken eines Transportfahrzeugs gegriffen und mittels einer Seilwinde und/oder einem Hydraulikantrieb auf das Transportfahrzeug gezogen und/oder gehoben werden.

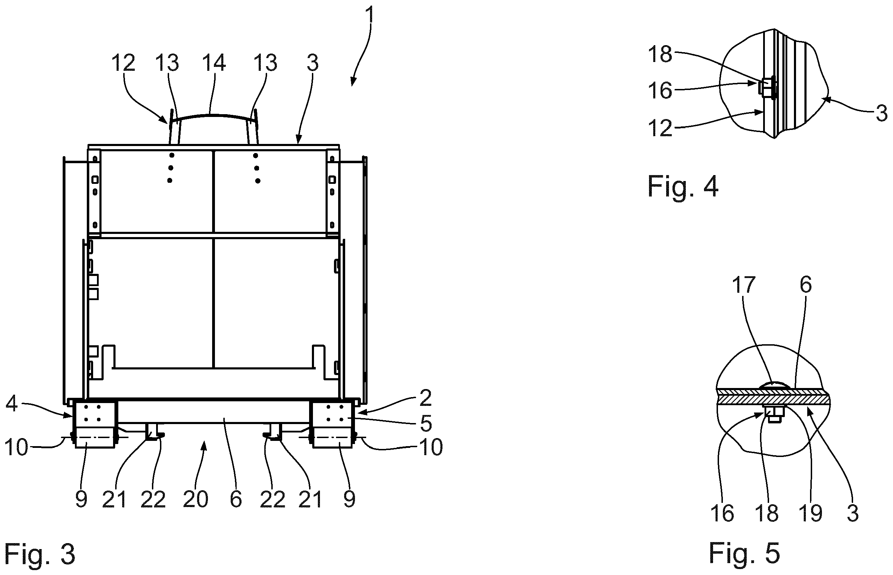

Die Rahmenstruktur 4 weist mehrere Befestigungselemente 16 zur Befestigung des stationären Aufbaus 3 auf. Die Befestigungselemente 16 sind in Fig. 4 und 5 näher dargestellt. Die Befestigungselemente 16 sind jeweils als Durchsteck-Schraubverbindungen ausgeführt. Eine Durchsteckschraube 17 ist durch fluchtende Befestigungsbohrungen der Rahmenstruktur 4 und/oder des Stirnabschnitts 12 beziehungsweise des stationären Aufbaus 3 gesteckt und mittels einer Haltemutter 18, die auf einen Gewindeabschnitt der Durchsteckschraube 17 aufgeschraubt ist, gehalten. Zudem kann eine Unterlegscheibe 19 vorgesehen sein.

Der Transportrahmen 2 ist gemäß dem gezeigten Ausführungsbeispiel als Abrollbehälter gemäß DIN 30722 ausgeführt. Es sind auch andere, insbesondere standardisierte, Ausführungen denkbar. Wesentlich ist, dass der Transportrahmen 2 standardisiert, fehlerunanfällig und unkompliziert auf ein Transportfahrzeug aufgesetzt und damit transportiert werden kann.

An der Unterseite weist die Rahmenstruktur eine Koppelstruktur des Transportrahmens 2 an dem Transportfahrzeug auf. Die Koppelstruktur umfasst eine Linearführung 20, die zwei Führungselemente 21 aufweist. Die Führungselemente 21 sind bezüglich der Längsachse 7 gleich beabstandet an einer Unterseite der Querelemente 6 befestigt, insbesondere angeschweißt. Die Führungselemente 21 weisen jeweils einen dem gegenüberliegend angeordneten Führungselement 21 zugewandten Rückhaltevorsprung 22 auf. Die Führungselemente 21 geben eine Führungsbahn vor, die mit korrespondierenden Gleitbahnen auf dem Transportfahrzeug korrespondieren. Der Transportrahmen 2 kann mit der Linearführung 20 auf die Gleitbahn des Transportfahrzeugs mit reduziertem Reibwiderstand aufgeschoben werden.

An der Oberseite weist die Rahmenstruktur Befestigungselemente 23 auf, die eine lösbare Befestigung des Wechselaufbaus ermöglichen. Die Befestigungselemente 23 sind gemäß dem gezeigten Ausführungsbeispiel als Aufnahmebohrungen ausgeführt, die an den Querelementen 6 unmittelbar oder an einer Befestigungsplatte 24, die an dem hinteren Querelement 6 befestigt ist, ausgeführt sein können. Die Befestigungsöffnungen sind in einem standardisierten Raster angeordnet. Die Befestigungsöffnungen dienen zur dauerhaften Befestigung eines Drehverschlusselements, insbesondere in Form eines Twist-Lock-Verbindungselements oder eines Bajonettverschluss-Verbindungselements. Ein Drehverschlusselement ermöglicht ein lösbares Verriegeln des Wechselaufbaus am Transportrahmen 2, insbesondere an der Rahmenstruktur 4. Der Transportrahmen 2 ermöglicht die standardisierte und unkomplizierte Kopplung von Standard-Transportcontainern mit der Presse.

Nachfolgend wird die Verwendung des Transportaufbaus 1 näher erläutert. In der in Fig. 1 bis 5 gezeigten Anordnung kann der Transportaufbau 1 auf ein nicht dargestelltes Transportfahrzeug aufgeladen werden. Dazu kann das Transportfahrzeug den Transportaufbau 1 am Bügel 15 mit einem Hebeelement greifen und anheben. Der Transportaufbau 1 wird auf eine Ladefläche des Transportfahrzeugs gezogen. Während des Ziehens des Transportaufbaus 1 kann dieser mit den Rollenelementen 9 auf dem Untergrund rollen und mit der Linearführung 20 geführt aufgeschoben werden.

Mit dem Transportfahrzeug wird der Transportaufbau 1 zu einem Einsatzort transportiert und dort entsprechend abgesetzt. Der Transportrahmen ist geeignet, auf einem definierten Untergrund, insbesondere in Form eines Kiesbetts, abgesetzt zu werden. Der Transportrahmen ermöglicht ein gesichertes Abstellen des stationären Aufbaus 3 auf dem Untergrund.

Nach dem Abladen des Transportaufbaus 1 von dem Transportfahrzeug ist dieses wieder unmittelbar einsatzfähig. Insbesondere ist es nicht erforderlich, dass das Transportfahrzeug während des Betriebs des stationären Aufbaus 3 am Einsatzort verbleibt.

Für den Betrieb des stationären Aufbaus 3, einer mobilen Presse, kann auf dem Transportrahmen 2 ein Container als Wechselaufbau angeordnet und mit dem stationären Aufbau 3 gekoppelt werden. Dazu kann der Container unkompliziert und unmittelbar dem den Verdrehschlussverbindungselementen zusammenwirken. Der Wechselaufbau ist unkompliziert und unmittelbar am Transportrahmen 2 befestigt. Das Zusammenwirken zwischen dem stationären Aufbau 3 und dem Wechselaufbau ist vereinfacht und insbesondere fehlerunanfällig.

Wenn der Container gefüllt ist, kann dieser über die Verdrehschlussverbindungselemente vom Transportrahmen 2 gelöst und durch einen neuen, leeren Container ersetzt werden. Ein unkomplizierter Wechsel der Wechselaufbaute ist möglich.

Nach Abschluss des Einsatzes des stationären Aufbaus 3 wird der Transportaufbau 1 von dem Transportfahrzeug aufgeladen und abgeholt. Zusammen mit dem stationären Aufbau 3 kann ein Wechselaufbau mit dem Transportaufbau 1 abtransportiert werden.

Für den Betrieb des stationären Aufbaus 3 kann eine eigene Energieversorgung vorgesehen sein. Diesbezüglich wird auf die EP 2 946 916 A1 verwiesen.

## Patentansprüche

1. Transportaufbau mit einem Transportrahmen für einen transportierbaren Aufbau, wobei der Transportrahmen (2) umfasst
a. eine Rahmenstruktur (4)
b. mindestens ein Befestigungselement (16) zum Befestigen des Aufbaus (3) am Transportrahmen (2),
c. eine Koppelstruktur zum lösbaren Koppeln des Transportrahmens (2) an einem Unterbau, und
mit einem am Transportrahmen (2) befestigten Aufbau (3), der einen Wechselaufbau, der vom Transportrahmen (2) wechselbar ausgeführt ist, und einen statischen Aufbau (3), der dauerhaft am Transportrahmen (2) befestigt ist, aufweist,
**dadurch gekennzeichnet, dass** der statische Aufbau eine Presse umfasst,
der Wechselaufbau in Form eines separaten, an die Presse andockbaren Containers ausgeführt ist.

2. Transportaufbau gemäß Anspruch 1, **dadurch gekennzeichnet, dass** das mindestens eine Befestigungselement (16, 23) an einer dem Aufbau (3) zugewendeten Oberseite der Rahmenstruktur (4) angeordnet ist.

3. Transportaufbau gemäß einem der vorstehenden Ansprüche, **dadurch gekennzeichnet, dass** die Koppelstruktur an einer dem Aufbau (3) abgewendeten Unterseite der Rahmenstruktur (4) angeordnet ist.

4. Transportaufbau gemäß Anspruch 3, **dadurch gekennzeichnet, dass** die Koppelstruktur eine an einer Unterseite der Rahmenstruktur (4) angeordnete Linearführung (20) zum geführten Aufschieben des Transportrahmens (2) auf den Unterbau aufweist.

5. Transportaufbau gemäß einem Anspruch 3 oder 4, **dadurch gekennzeichnet, dass** die Koppelstruktur des Transportrahmens (2) der eines Abrollbehälters, insbesondere gemäß DIN 30722, oder der eines Absetzkippbehälters, insbesondere gemäß DIN 30720, entspricht.

6. Transportaufbau gemäß einem der vorstehenden Ansprüche, **gekennzeichnet durch** mehrere Befestigungselemente (16, 23), die in einer standardisierten Anordnung zueinander angeordnet sind.

7. Transportaufbau gemäß einem der vorstehenden Ansprüche, **dadurch gekennzeichnet, dass** das mindestens eine Befestigungselement (16, 23) als Drehverschlusselement, insbesondere als Twist-Lock-Verbindungselement oder als Bajonettverschluss-Verbindungselement, zum lösbaren Verriegeln eines Wechselaufbaus ausgeführt ist.

8. Transportaufbau gemäß einem der vorstehenden Ansprüche, **dadurch gekennzeichnet, dass** das mindestens eine Befestigungselement (16) als Befestigungsöffnung ausgeführt ist, die insbesondere unmittelbar in der Rahmenstruktur (4) oder in einer mit der Rahmenstruktur (4) verbundenen Befestigungsplatte (24) angeordnet ist.

9. Transportaufbau gemäß einem der vorstehenden Ansprüche, **gekennzeichnet durch** mindestens ein Rollenelement (9) zum Rollen auf einem Untergrund, wobei das mindestens eine Rollenelement (9) an einer Unterseite der Rahmenstruktur (4) vorsteht.

10. Transportaufbau gemäß einem der vorstehenden Ansprüche, **dadurch gekennzeichnet, dass** die Rahmenstruktur (4) mindestens ein Längselement (5) und mindestens ein quer, insbesondere senkrecht, dazu orientiertes Querelement (6) aufweist, wobei das mindestens eine Längselement (5) und das mindestens eine Querelement (6) unlösbar mit einander verbunden, insbesondere verschweißt, sind.

11. Transportaufbau gemäß einem der vorstehenden Ansprüche, **gekennzeichnet durch** einen Stirnabschnitt (12), der insbesondere stirnseitig an der Rahmenstruktur (4) befestigt ist und insbesondere gegenüber einer von der Rahmenstruktur (4) definierten Rahmenebene quer, insbesondere senkrecht, orientiert ist.

12. Transportanordnung umfassend einen Transportaufbau (1) gemäß einem der vorstehenden Ansprüche und einen Unterbau, insbesondere in Form eines Transportfahrzeugs, wobei der Transportaufbau (1) und der Unterbau lösbar koppelbar sind.

13. Transportanordnung gemäß Anspruch 12, **gekennzeichnet durch** mindestens ein Gegenbefestigungselement (23), das am Wechselaufbau zum lösbaren Verriegeln der Rahmenstruktur (4) mit dem mindestens einen Befestigungselement (16, 23) zusammenwirkt.

## Claims

1. Transport body with a transport frame for a transportable body, wherein the transport frame (2) comprises
a. a frame structure (4),
b. at least one fastening element (16) for fastening the body (3) to the transport frame (2),
c. a coupling structure for detachably coupling the transport frame (2) to a substructure, and
with a body (3) fastened to the transport frame (2), which body has an interchangeable body designed so as to be interchangeable from the transport frame (2) and has a static body (3) fastened permanently to the transport frame (2),
**characterized in that** the static body comprises a press,
the interchangeable body is designed in the form of a separate container that can be docked onto the press.

2. Transport body according to Claim 1, **characterized in that** the at least one fastening element (16, 23) is arranged on a top side of the frame structure (4) that faces towards the body (3).

3. Transport body according to either of the preceding claims, **characterized in that** the coupling structure is arranged on a bottom side of the frame structure (4) that faces away from the body (3).

4. Transport body according to Claim 3, **characterized in that** the coupling structure has a linear guide (20) arranged on a bottom side of the frame structure (4) for the controlled sliding of the transport frame (2) onto the substructure.

5. Transport body according to either of Claims 3 and 4, **characterized in that** the coupling structure of the transport frame (2) corresponds to that of a roller container, in particular according to DIN 30722, or to that of a skip loader container, in particular according to DIN 30720.

6. Transport body according to one of the preceding claims, **characterized by** a plurality of fastening elements (16, 23) which are arranged in a standardized arrangement with respect to one another.

7. Transport body according to one of the preceding claims, **characterized in that** the at least one fastening element (16, 23) is designed as a rotary fastener element, in particular as a twist-lock connecting element, or as a bayonet fastener connecting element, for detachably locking an interchangeable body.

8. Transport body according to one of the preceding claims, **characterized in that** the at least one fastening element (16) is designed as a fastening opening, in particular arranged directly in the frame structure (4) or in a fastening plate (24) connected to the frame structure (4).

9. Transport body according to one of the preceding claims, **characterized by** at least one roller element (9) for rolling on an underlying surface, wherein the at least one roller element (9) protrudes from a bottom side of the frame structure (4).

10. Transport body according to one of the preceding claims, **characterized in that** the frame structure (4) has at least one longitudinal element (5) and at least one transverse element (6) oriented transversely, in particular perpendicularly, thereto, wherein the at least one longitudinal element (5) and the at least one transverse element (6) are non-detachably connected, in particular welded, to one another.

11. Transport body according to one of the preceding claims, **characterized by** a face portion (12) fastened, in particular at a face side, to the frame structure (4) and in particular oriented transversely, in particular perpendicularly, with respect to a frame plane defined by the frame structure (4).

12. Transport assembly comprising a transport body (1) according to one of the preceding claims and a substructure, in particular in the form of a transport vehicle, wherein the transport body (1) and the substructure are detachably couplable.

13. Transport assembly according to Claim 12, **characterized by** at least one mating fastening element (23) which, on the interchangeable body, interacts with the at least one fastening element (16, 23) for the purposes of detachably locking the frame structure (4).

## Revendications

1. Structure de transport comprenant un châssis de transport pour une structure transportable, le châssis de transport (2) comprenant
a. une structure de châssis (4),
b. au moins un élément de fixation (16) pour la fixation de la structure (3) au châssis de transport (2),
c. une structure d'accouplement permettant d'accoupler de manière amovible le châssis de transport (2) à une structure de base, et
une structure (3) fixée au châssis de transport (2) et comportant une structure interchangeable qui est conçue pour être remplacée par le châssis de transport (2), et une structure statique (3) qui est fixée de manière permanente au châssis de transport (2), **caractérisée en ce que** la structure statique comprend une presse, et **en ce que** la structure interchangeable est réalisée sous la forme d'un conteneur séparé qui peut être amarré à la presse.

2. Structure de transport selon la revendication 1, **caractérisée en ce que** l'au moins un élément de fixation (16, 23) est disposé sur un côté supérieur de la structure de châssis (4) orienté vers la structure (3).

3. Structure de transport selon l'une des revendications précédentes, **caractérisée en ce que** la structure d'accouplement est disposée sur un côté inférieur de la structure de châssis (4) opposé à la structure (3).

4. Structure de transport selon la revendication 3, **caractérisée en ce que** la structure d'accouplement comprend un guidage linéaire (20) disposé sur un côté inférieur de la structure de châssis (4) pour le glissement guidé du châssis de transport (2) sur la structure de base.

5. Structure de transport selon la revendication 3 ou 4, **caractérisée en ce que** la structure d'accouplement du châssis de transport (2) correspond à celle d'une caisse mobile, notamment selon la norme DIN 30722, ou à celle d'une caisse basculante, notamment selon la norme DIN 30720.

6. Structure de transport selon l'une des revendications précédentes, **caractérisée par** une pluralité d'éléments de fixation (16, 23) disposés selon une disposition standardisée les uns par rapport aux autres.

7. Structure de transport selon l'une des revendications précédentes, **caractérisée en ce que** l'au moins un élément de fixation (16, 23) est réalisé sous la forme d'un élément de verrouillage rotatif, notamment sous la forme d'un élément de liaison à verrouillage rotatif ou d'un élément de liaison verrouillage à baïonnette, pour le verrouillage amovible d'une structure interchangeable.

8. Structure de transport selon l'une des revendications précédentes, **caractérisée en ce que** l'au moins un élément de fixation (16) est réalisé sous la forme d'une ouverture de fixation, qui est disposée en particulier directement dans la structure de châssis (4) ou dans une plaque de fixation (24) reliée à la structure de châssis (4).

9. Structure de transport selon l'une des revendications précédentes, **caractérisée par** au moins un élément de roulement (9) destiné à rouler sur une base, ledit au moins un élément de roulement (9) faisant saillie sur un côté inférieur de la structure de châssis (4).

10. Structure de transport selon l'une des revendications précédentes, **caractérisée en ce que** la structure de châssis (4) comporte au moins un élément longitudinal (5) et au moins un élément transversal (6) orienté transversalement, en particulier perpendiculairement à celui-ci, l'au moins un élément longitudinal (5) et l'au moins un élément transversal (6) étant reliés de manière inamovible, étant notamment soudés.

11. Structure de transport selon l'une des revendications précédentes, **caractérisée par** une section frontale (12) qui est fixée, en particulier du côté frontal, à la structure de châssis (4) et qui est orientée transversalement, en particulier perpendiculairement, par rapport à un plan de châssis défini par la structure de châssis (4).

12. Système de transport comprenant une structure de transport (1) selon l'une des revendications précédentes et une structure de base, en particulier sous la forme d'un véhicule de transport, la structure de transport (1) et la structure de base pouvant être accouplées de manière amovible.

13. Système de transport selon la revendication 12, **caractérisé par** au moins un élément de contre-fixation (23) qui coopère avec l'au moins un élément de fixation (16, 23), au niveau de la structure interchangeable, pour verrouiller de manière amovible la structure de châssis (4).
